# EUROPÄISCHE PATENTSCHRIFT

(11) **EP 3 130 441 B1**
(45) Veröffentlichungstag und Bekanntmachung des Hinweises auf die Patenterteilung: **13.12.2017**
(21) Anmeldenummer: 15180796.3
(22) Anmeldetag: 12.08.2015
(51) Int. Cl.: B29C 45/14, F16L 53/00, B29L 31/24

(54) **VERBINDER UND VERFAHREN ZUR HERSTELLUNG EINES VERBINDERS**
CONNECTOR AND METHOD OF MANUFACTURING A CONNECTOR
CONNECTEUR ET PROCEDE DE FABRICATION D'UN CONNECTEUR

(43) Veröffentlichungstag der Anmeldung: 15.02.2017
(73) Patentinhaber: TI Automotive (Fuldabrück) GmbH, 34277 Fuldabrück (DE)
(72) Erfinder: WEISSING, Michael, 69120 Heidelberg (DE); KNOBLOCH, Harald, 69121 Heidelberg (DE)
(74) Vertreter: Rohmann, Michael

(56) Entgegenhaltungen:
- EP-A1- 2 434 195
- WO-A1-2009/124910
- DE-A1-102010 051 550

## Beschreibung

Die Erfindung betrifft einen Verbinder bzw. einen Kraftfahrzeugverbinder, insbesondere einen Schnellverbinder für den Anschluss zumindest einer Rohrleitung bzw. Kraftfahrzeugrohrleitung für die Durchleitung eines fluiden Mediums, insbesondere für die Durchleitung einer Harnstofflösung bzw. einer wässrigen Harnstofflösung, wobei der Verbinder zumindest zwei Anschlussenden aufweist, wobei sich zwischen den Anschlussenden einer einen Innenkanal für die Durchleitung des fluiden Mediums umgebende Verbinderwandung erstreckt und wobei die Verbinderwandung bzw. der Innenkanal elektrisch beheizbar ist. Weiterhin betrifft die Erfindung ein Verfahren zur Herstellung eines solchen Verbinders. Wenn nachfolgend der Begriff Verbinder benutzt wird, ist damit vorzugsweise ein Kraftfahrzeugverbinder gemeint und wenn nachfolgend der Begriff Rohrleitung benutzt wird, ist dabei empfohlenermaßen eine Kraftfahrzeugrohrleitung gemeint.

Verbinder bzw. Kraftfahrzeugverbinder der vorstehend beschriebenen Art sind aus der Praxis in verschiedenen Ausführungsformen bekannt. Die Beheizung der Verbinder erfolgt dabei in der Regel elektrisch. Bekannt ist es weiterhin, für diese Beheizung einen elektrisch betriebenen Heizdraht zu benutzen, der sich normalerweise über den Umfang des Verbinders bzw. über den Umfang der Rohrleitung erstreckt. Bei solchen Verbindern besteht in der Regel das Problem, die Heizdrähte gezielt zu positionieren und funktionssicher anzuordnen bzw. zu fixieren. Wenn die elektrischen Heizleiter/Heizdrähte nicht exakt positioniert sind und/oder nicht funktionssicher an dem Verbinder fixiert sind, können sich Nachteile für die Beheizung, vor allem im Hinblick auf eine ungleichmäßige Beheizung von Verbinderbereichen ergeben. Es ist bereits bekannt, den Heizdraht mit an der Außenoberfläche des Verbinders angeordneten Formelementen zu positionieren bzw. zu fixieren. Der Heizdraht wird dann zwischen diesen Formelementen geführt. In der Regel wird der Heizdraht spulenförmig auf der Außenoberfläche des Verbinders zwischen den Formelementen aufgewickelt. Ein exaktes Wickeln in den Zwischenbereichen der Formelemente ist aber häufig nicht möglich, so dass der Heizdraht nicht wie gewünscht geführt bzw. fixiert wird und sich teilweise auch unerwünschte Kurzschlüsse ergeben. Ein weiterer Nachteil der bekannten Maßnahmen ist darin zu sehen, dass das Umwickeln des Verbinders mit dem Heizdraht relativ zeitaufwendig ist. Insoweit sind diese bekannten Maßnahmen verbesserungsbedürftig.

Ein Verbinder der eingangs genannten Art in Form einer konfektionierten elektrisch beheizbaren Medienleitung ist aus DE 10 2010 051 550 A1 bekannt. Hier ist eine integrierte elektrisch leitfähige Einrichtung vorgesehen, die in die Verbinderwandung eingebettete Heizleiter umfasst. Ein ähnlicher Verbinder ist im Übrigen auch aus WO 2009/124910 A1 bekannt.

Der Erfindung liegt das technische Problem zugrunde, einen Verbinder bzw. Kraftfahrzeugverbinder der eingangs genannten Art anzugeben, bei dem der Heizleiter exakt positioniert und fixiert ist und bei dem der Heizleiter zudem auf einfache, zügige und präzise sowie funktionssichere Weise aufgebracht werden kann. Der Erfindung liegt weiterhin das technische Problem zugrunde, ein Verfahren zur Herstellung eines solchen Verbinders anzugeben.

Zur Lösung dieses technischen Problems lehrt die Erfindung einen Verbinder bzw. Kraftfahrzeugverbinder, insbesondere Schnellverbinder für den Anschluss zumindest einer Rohrleitung bzw. Kraftfahrzeugrohrleitung für die Durchleitung eines fluiden Mediums - insbesondere für die Durchleitung einer Harnstofflösung - wobei der Verbinder zumindest zwei Anschlussenden aufweist, von denen zumindest ein Anschlussende für den Anschluss einer Rohrleitung vorgesehen ist, wobei sich zwischen den Anschlussenden eine einen Innenkanal für die Durchleitung des fluiden Mediums umgebende Verbinderwandung erstreckt, wobei die Verbinderwandung bzw. der Innenkanal elektrisch beheizbar ist, wobei für die elektrische Beheizung der Verbinderwandung bzw. des Innenkanals zumindest ein dreidimensional ausgebildetes Heizleiteraggregat aus einem strangförmigen Heizleiter (Heizstrang) vorhanden ist, wobei zumindest 30 %, vorzugsweise zumindest 40 % und bevorzugt zumindest 50 % der Länge des strangförmigen Heizleiters in die Verbinderwandung eingebettet ist und wobei mehrere Heizleiterabschnitte des strangförmigen Heizleiters (Heizstranges) in radialer Richtung quer zur Längsachse des Verbinders angeordnet sind und sich über jeweils zumindest 60 % der radialen Dicke d der Verbinderwandung erstreckt/erstrecken und wobei zumindest ein Teil der sich in radialer Richtung über jeweils zumindest 60 % der radialen Dicke d der Verbinderwandung erstreckenden Heizleiterabschnitte in Umkehrpunkten endet, wobei an einem solchen Umkehrpunkt zumindest ein weiterer Heizleiterabschnitt des strangförmigen Heizleiters angeschlossen ist, der sich im Vergleich zu dem ersten an den Umkehrpunkt angeschlossenen Heizleiterabschnitt des Heizleiters in umgekehrter radialer Richtung erstreckt. - Dass sich mehrere Heizleiterabschnitte in radialer Richtung der Verbinderwandung erstrecken meint insbesondere, dass die Heizleiterabschnitte quer zur Längsachse des Verbinders bzw. des Innenkanals angeordnet sind. Grundsätzlich kann sich ein solcher Heizleiterabschnitt senkrecht bzw. im Wesentlichen senkrecht zur Längsachse des Verbinders bzw. des Innenkanals erstrecken. Zumindest ein Heizleiterabschnitt erstreckt sich nach einer Ausführungsform schräg zu der Längsachse des Verbinders bzw. des Innenkanals.

Zweckmäßigerweise ist die Verbinderwandung zylinderförmig bzw. im Wesentlichen zylinderförmig ausgestaltet und es liegt im Rahmen der Erfindung, dass die Verbinderwandung aus Kunststoff bzw. aus thermoplastischem Kunststoff besteht oder im Wesentlichen aus Kunststoff bzw. aus thermoplastischem Kunststoff besteht. Es empfiehlt sich, dass das erfindungsgemäße Heizleiteraggregat eine käfigartige dreidimensionale Struktur aufweist. Dreidimensionale Struktur meint hier insbesondere, dass das Heizleiteraggregat aus einer gedachten Zylinderseitenfläche nach oben und/oder nach unten hervorragende Heizleiterelemente bzw. Heizleiterabschnitte aufweist und dass vorzugsweise diese Heizleiterelemente bzw. Heizleiterabschnitte über den Umfang des gedachten Zylinders verteilt angeordnet sind. Die gedachte Zylinderfläche befindet sich dabei zweckmäßigerweise in der Verbinderwandung des erfindungsgemäßen Verbinders. Zweckmäßigerweise handelt es sich bei dem Heizleiteraggregat im noch nicht eingebetteten Zustand um eine selbsttragende Struktur bzw. Käfigstruktur aus dem strangförmigen Heizleiter. Im noch nicht eingebetteten Zustand weist das Heizleiteraggregat nach empfohlener Ausführungsform eine akkordeonartige Struktur bzw. Käfigstruktur auf. Zweckmäßigerweise ist das Heizleiteraggregat in diesem noch nicht eingebetteten Zustand in seiner Längsrichtung bzw. entlang seiner Längsachse komprimierbar.

Dass der strangförmige Heizleiter in die Verbinderwandung eingebettet ist, meint im Rahmen der Erfindung insbesondere, dass der Heizleiter vollständig von dem Material bzw. von dem Kunststoff der Verbinderwandung umgeben ist. Erfindungsgemäß ist das Heizleiteraggregat zumindest teilweise in die Verbinderwandung eingebettet. Gemäß besonders bewährter Ausführungsform der Erfindung sind zumindest 60 %, vorzugsweise zumindest 70 %, bevorzugt zumindest 80 % und sehr bevorzugt zumindest 90 % der Länge des Heizleiters in die Verbinderwandung eingebettet bzw. in das Material/in den Kunststoff der Verbinderwandung eingebettet.

Es liegt im Rahmen der Erfindung, dass die Verbinderwandung des erfindungsgemäßen Verbinders als Spritzgussteil ausgebildet ist bzw. Bestandteil eines Spritzgussteiles ist. Nach einer bewährten Ausführungsform handelt es sich dabei um ein einstückiges Spritzgussteil. Das die Verbinderwandung bildende bzw. die Verbinderwandung bereitstellende Spritzgussteil verfügt zweckmäßigerweise über die zumindest zwei Anschlussenden des erfindungsgemäßen Verbinders.

Es liegt im Rahmen der Erfindung, dass die Verbinderwandung mit dem zumindest teilweise eingebetteten Heizleiteraggregat bzw. Heizleiter aus ein und demselben Kunststoff bzw. thermoplastischen Kunststoff besteht. Wie oben bereits dargelegt liegt es weiterhin im Rahmen der Erfindung, dass diese Verbinderwandung durch Spritzgießen erzeugt wird.

Zweckmäßigerweise erstreckt sich das Heizleiteraggregat bzw. der strangförmige Heizleiter über zumindest 50 %, vorzugsweise über zumindest 60 %, bevorzugt über zumindest 70 %, sehr bevorzugt über zumindest 80 % und besonders bevorzugt über zumindest 90 % des Umfanges des Verbinders. Eine besonders empfohlene Ausführungsform der Erfindung ist dadurch gekennzeichnet, dass sich das Heizleiteraggregat bzw. der strangförmige Heizleiter über den gesamten Umfang des Verbinders erstreckt. - Bewährtermaßen erstreckt sich das Heizleiteraggregat bzw. der strangförmige Heizleiter über zumindest 30 %, vorzugsweise über zumindest 40 %, bevorzugt über zumindest 50 %, sehr bevorzugt über zumindest 60 % und besonders bevorzugt über zumindest 70 % der axialen Länge l des erfindungsgemäßen Verbinders.

Es liegt im Rahmen der Erfindung, dass der strangförmige Heizleiter als zumindest ein Heizdraht, zweckmäßigerweise als zumindest ein metallischer Heizdraht ausgebildet ist. Gemäß einer Ausführungsform besteht der strangförmige Heizleiter lediglich aus einem einzigen Heizdraht. Eine andere Ausführungsform zeichnet sich dadurch aus, dass zwei oder mehr Heizdrähte zu dem Heizleiterstrang zusammengefasst sind, beispielsweise zu dem Heizleiterstrang miteinander verdrillt sind. Als Heizleiter kann grundsätzlich auch ein metallischer Heizstreifen eingesetzt werden.

Erfindungsgemäß erstrecken sich mehrere Heizleiterabschnitte, vorzugsweise zumindest fünf, bevorzugt zumindest sechs und sehr bevorzugt zumindest sieben Heizleiterabschnitte in radialer Richtung über jeweils zumindest 60 % und sehr bevorzugt zumindest 70% der radialen Dicke d der Verbinderwandung. Nach einer Ausführungsvariante erstrecken sich zumindest acht oder zumindest zehn Heizleiterabschnitte auf diese Weise in radialer Richtung der Verbinderwandung. Eine sehr bevorzugte Ausführungsform der Erfindung ist dadurch gekennzeichnet, dass sich mehrere Heizleiterabschnitte bzw. die vorstehend beschriebene bevorzugte Anzahl von Heizleiterabschnitten über zumindest 80 %, vorzugsweise über zumindest 90 % und bevorzugt über zumindest 95 % der radialen Dicke d der Verbinderwandung erstrecken. Eine ganz empfohlene Ausführungsform der Erfindung zeichnet sich dadurch aus, dass sich zumindest ein Heizleiterabschnitt und bevorzugt mehrere Heizleiterabschnitte bzw. die vorstehend beschriebene Anzahl an mehreren Heizleiterabschnitten über die gesamte radiale Dicke d der Verbinderwandung erstreckt/erstrecken.

Erfindungsgemäß endet zumindest ein Teil der sich in radialer Richtung über zumindest 60 % der radialen Dicke d der Verbinderwandung erstreckenden Heizleiterabschnitte des strangförmigen Heizleiters in Umkehrpunkten. Diese Umkehrpunkte ergeben sich insbesondere bei der Projektion des Heizleiteraggregates auf eine gedachte Projektionsebene, welche Projektionsebene sich durch die Längsachse bzw. Mittel- Längsachse des Verbinders bzw. des Innenkanals des Verbinders sowie in Längsrichtung des Verbinders erstreckt. Bei einem gewinkelt ausgebildeten Verbinder kann sich eine solche Projektionsebene durch die Längsachse eines linearen beheizten Verbinderabschnittes erstrecken. An einem Umkehrpunkt ist zumindest ein weiterer Heizleiterabschnitt des strangförmigen Heizleiters angeschlossen, der sich im Vergleich zu dem ersten an den Umkehrpunkt angeschlossenen Heizleiterabschnitt des Heizleiters in umgekehrter radialer Richtung erstreckt. Die Umkehrpunkte sind somit gleichsam die Endpunkte der Heizleiterabschnitte bzw. die Heizleiterabschnitte gehen in den Umkehrpunkten ineinander über. Es liegt im Rahmen der Erfindung, dass die Umkehrpunkte keine den Heizstrang unterbrechenden Verbindungsstellen für die Heizleiterabschnitte darstellen. In den Umkehrpunkten erfolgt nach bevorzugter Ausführungsform der Erfindung lediglich eine Richtungsänderung des Heizstranges mittels der hier mündenden Heizleiterabschnitte.

Die Heizleiterabschnitte verlaufen in Bezug auf den Innenkanal des Verbinders in radialer Richtung. Es wurde bereits darauf hingewiesen, dass radiale Richtung hier eine Querorientierung der Heizleiterabschnitte zur Längsachse des Verbinders bzw. des Innenkanals meint und somit auch einen schräg an der Längsachse orientierten Verlauf der Heizleiterabschnitte meint.

Eine ganz besonders bevorzugte Ausführungsform der Erfindung ist dadurch gekennzeichnet, dass die Umkehrpunkte über den Umfang des Verbinders verteilt angeordnet sind und/oder nach empfohlener Ausführungsform über die axiale Länge des Verbinders bzw. der Verbinderwandung verteilt angeordnet sind. Es liegt weiterhin im Rahmen der Erfindung, dass die Heizleiterabschnitte über den Umfang des Verbinders verteilt angeordnet sind und/oder über die axiale Länge des Verbinders verteilt angeordnet sind.

Insbesondere in Bezug auf die oben erläuterte gedachte Projektionsebene bilden die Heizleiterabschnitte in den Umkehrpunkten Spitzen und/oder abgerundete Spitzen. Die aneinander angeschlossenen Heizleiterabschnitte können an dem Umkehrpunkt auch einen Bogen bilden bzw. bogenförmig angeordnet sein. Auf der gedachten Projektionsebene beträgt der Winkel α zwischen zwei in einem Umkehrpunkt aneinander angeschlossenen Heizleiterabschnitten zweckmäßigerweise 10° bis 80°, bevorzugt 10° bis 70°, sehr bevorzugt 10° bis 60° und besonders bevorzugt 10° bis 50°. Vorzugsweise bilden die Heizleiterabschnitte des Heizleiteraggregates zumindest zum Teil eine regelmäßige Struktur bzw. eine regelmäßige Käfigstruktur.

Eine besonders empfohlene Ausführungsform der Erfindung ist dadurch gekennzeichnet, dass zumindest ein Teil der Umkehrpunkte in die Verbinderwandung bzw. in das Material der Verbinderwandung eingebettet ist. Es liegt im Rahmen der Erfindung, dass die Umkehrpunkte dabei in den Kunststoff bzw. in den thermoplastischen Kunststoff der Verbinderwandung eingebettet sind. Es hat sich besonders bewährt, dass alle Umkehrpunkte in die Verbinderwandung bzw. in das Material der Verbinderwandung eingebettet sind.

Es empfiehlt sich, dass zumindest zwei, bevorzugt zwei Versorgungsabschnitte des strangförmigen Heizleiters für die Stromversorgung des Heizleiteraggregates vorgesehen sind und dass diese Versorgungsabschnitte sich über zumindest einen Teil, bevorzugt über zumindest 20 %, sehr bevorzugt zumindest 30 % der radialen Dicke der Verbinderwandung in radialer Richtung erstrecken. Dabei liegt es im Rahmen der Erfindung, dass die genannten Versorgungsabschnitte für die Stromversorgung verschieden sind von den vorstehend beschriebenen Heizleiterabschnitten.

Zweckmäßigerweise ist eine die Verbinderwandung umgebende Ummantelung vorgesehen, wobei es sich bei der Ummantelung bevorzugt um eine gegossene bzw. spritzgegossene Ummantelung handelt. Vorzugsweise ist die Ummantelung heizleiterfrei bzw. im Wesentlichen heizleiterfrei ausgebildet. Gemäß einer Ausführungsvariante kann die den Innenkanal umgebende Verbinderwandung mit einer spritzgegossenen Ummantelung ummantelt werden. Grundsätzlich könnte die Ummantelung auch aus zwei zu der Ummantelung zusammensetzbaren Halbschalen bestehen oder aus einer Mehrzahl von die Ummantelung bildenden Teilschalen. Es liegt im Rahmen der Erfindung, dass zwischen der Verbinderwandung bzw. der das Heizleiteraggregat aufnehmenden Verbinderwandung einerseits und der die Verbinderwandung und das darin zumindest teilweise aufgenommene Heizleiteraggregat umgebenden Ummantelung andererseits unterschieden wird.

Zur Lösung des technischen Problems lehrt die Erfindung weiterhin ein Verfahren zur Herstellung eines Verbinders bzw. eines Kraftfahrzeugverbinders, insbesondere eines Schnellverbinders für den Anschluss zumindest einer Rohrleitung bzw. Kraftfahrzeugrohrleitung für die Durchleitung eines fluiden Mediums, insbesondere für die Durchleitung einer Harnstofflösung, wobei die den Innenkanal umgebende Verbinderwandung zumindest zum Teil bzw. teilweise durch Spritzgießen aus thermoplastischem Kunststoff erzeugt wird, wobei ein Heizleiteraggregat mit dreidimensionaler Struktur aus einem strangförmigen Heizleiter beim Spritzgießen in die Verbinderwandung eingebettet wird und zwar mit der Maßgabe eingebettet wird, dass zumindest 30 %, vorzugsweise zumindest 40 % und bevorzugt zumindest 50 % sowie sehr bevorzugt zumindest 60 % der Länge des strangförmigen Heizleiters in die Verbinderwandung eingebettet wird und dass mehrere Heizleiterabschnitte des strangförmigen Heizleiters in radialer Richtung quer zur Längsachse des Verbinders angeordnet sind und sich über jeweils zumindest 60 der radialen Dicke d der Verbinderwandung erstrecken und dass zumindest ein Teil der sich in radialer Richtung über jeweils zumindest 60 % der radialen Dicke d der Verbinderwandung erstreckenden Heizleiterabschnitte in Umkehrpunkten endet, wobei an einem solchen Umkehrpunkt zumindest ein weiterer Heizleiterabschnitt des strangförmigen Heizleiters angeschlossen ist, der sich im Vergleich zu dem ersten an den Umkehrpunkt angeschlossenen Heizleiterabschnitt des Heizleiters in umgekehrter radialer Richtung erstreckt.

Es liegt im Rahmen des erfindungsgemäßen Verfahrens, dass die gesamte Verbinderwandung bzw. im Wesentlichen die gesamte Verbinderwandung in einem einzigen Spritzgießvorgang erzeugt wird und das Heizleiteraggregat bei diesem einen Spritzgießvorgang in die Verbinderwandung eingebettet wird. Zweckmäßigerweise wird das Heizleiteraggregat direkt in eine Spritzgießvorrichtung bzw. in eine Spritzgießform eingeführt bzw. eingelegt. Dann wird die gesamte Verbinderwandung beim nachfolgenden Spritzgießvorgang hergestellt, wobei die Verbinderwandung gleichsam um das Heizleiteraggregat gespritzt wird, so dass das Heizleiteraggregat in der Verbinderwandung eingebettet wird.

Nach einer weiteren Ausführungsform der Erfindung wird ein Verbinderwandungsteil mit dem darin eingebetteten Heizleiteraggregat als Vorformteil, vorzugsweise als Vorformteil aus thermoplastischem Kunststoff hergestellt. Im Anschluss daran wird dieses Verbinderwandungsteil bzw. dieses Vorformteil in eine Spritzgießvorrichtung eingelegt und dort zur vollständigen bzw. zur fertigen Verbinderwandung umspritzt. Zweckmäßigerweise ist das Verbinderwandungsteil bzw. das Vorformteil zylinderförmig bzw. im Wesentlichen zylinderförmig ausgebildet. Das Verbinderwandungsteil bzw. Vorformteil kann ebenfalls durch Spritzgießen hergestellt werden oder auch durch einen Tauchvorgang (Dipvorgang) durch Eintauchen des Heizleiteraggregates in geschmolzenen thermoplastischen Kunststoff. Das Vorformteil wird dann in eine Spritzgießvorrichtung bzw. Spritzgießform eingelegt und mit thermoplastischem Kunststoff zur vollständigen Verbinderwandung umspritzt.

Eine andere empfohlene Ausführungsform des erfindungsgemäßen Verfahrens ist dadurch gekennzeichnet, dass zunächst ein Verbinderwandungsinnenteil - vorzugsweise durch Spritzgießen - erzeugt wird und dass ein Verbinderwandungsteil bzw. Vorformteil mit dem darin eingebetteten Heizleiteraggregat auf das Verbinderwandungsinnenteil aufgeschoben wird. Weiterhin liegt es im Rahmen der Erfindung, dass der Außendurchmesser des Verbinderwandungsinnenteils geringer ist als der Innendurchmesser des Verbinderwandungsteils bzw. Vorformteils. Das Vorformteil kann - wie oben bereits beschrieben - vorzugsweise durch Spritzgießen oder durch einen Tauchvorgang (Dipvorgang) erzeugt werden. Zweckmäßigerweise wird das Aggregat aus dem Verbinderwandungsinnenteil und dem darauf aufgeschobenen Verbinderwandungsteil bzw. Vorformteil in einer Spritzgießvorrichtung zur vollständigen bzw. fertigen Verbinderwandung des Verbinders umspritzt.

Nach einer anderen bewährten Ausführungsform der Erfindung wird zunächst ein Verbinderwandungsinnenteil - vorzugsweise durch Spritzgießen - erzeugt und anschließend wird das Heizleiteraggregat auf das Verbinderwandungsinnenteil aufgebracht bzw. aufgeschoben. Danach wird das Aggregat aus Verbinderwandungsinnenteil und Heizleiteraggregat in einer Spritzgießvorrichtung zur vollständigen bzw. fertigen Verbinderwandung des Verbinders umspritzt. Es liegt im Rahmen der Erfindung, dass das Verbinderwandungsinnenteil zylinderförmig bzw. im Wesentlichen zylinderförmig ausgebildet ist. Weiterhin liegt es im Rahmen der Erfindung, dass das reine Heizleiteraggregat (ohne Kunststoff) so ausgebildet ist, dass die inneren Komponenten des Heizleiteraggregates bzw. deren nach innen ragende Endpunkte einen Zylinder bzw. in etwa einen Zylinder aufspannen, so dass das zylinderförmige bzw. im Wesentlichen zylinderförmige Heizleiteraggregat problemlos auf das zylinderförmige Verbinderwandungsinnenteil aufgeschoben werden kann.

Der Erfindung liegt die Erkenntnis zugrunde, dass bei einem erfindungsgemäßen Verbinder eine sehr einfache und exakte Positionierung sowie zugleich eine sehr funktionssichere Fixierung der Heizleiterelemente möglich ist. Dadurch ist im Vergleich zu den aus dem Stand der Technik bekannten Verbindern die Gefahr von Fehlfunktionen, insbesondere von Kurzschlüssen und dergleichen geringer. Im Übrigen ist im Vergleich zu dem verhältnismäßig zeitaufwendigen Aufwickeln eines Heizdrahtes bei den aus dem Stand der Technik bekannten Maßnahmen im Rahmen der Erfindung eine schnellere Montage des erfindungsgemäßen Heizleiteraggregates möglich. Die einfache und zügige Montage der Heizleiteraggregate ermöglicht auch eine problemlose Massenfertigung der erfindungsgemäßen Verbinder. Bei den für den erfindungsgemäßen Verbinder eingesetzten Heizleiteraggregaten handelt es sich um stabile und selbsttragende Aggregate, die besonders vorteilhaft in einem Spritzgießprozess eingesetzt werden können. Auch die Realisierung der elektrischen Versorgungsverbindungen ist bei dem erfindungsgemäßen Heizleiteraggregat besonders einfach und problemlos. Im Ergebnis zeichnet sich ein erfindungsgemäßer Verbinder durch eine optimale Stabilität und Festigkeit aus sowie durch eine effiziente Beheizung des Innenkanals. Das erfindungsgemäße Verfahren zur Herstellung des Verbinders zeichnet sich fernerhin durch Einfachheit, geringen Aufwand und geringe Kosten aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines erfindungsgemäßen Verbinders,
- Fig. 2a), b): die Verfahrensschritte einer ersten Ausführungsform des erfindungsgemäßen Verfahrens,
- Fig. 3a), b), c): den Gegenstand gemäß Fig. 2 in einer weiteren Ausführungsform,
- Fig. 4a), b), c): den Gegenstand gemäß Fig. 2 in einer dritten Ausführungsvariante und
- Fig. 5a), b): den Gegenstand nach Fig. 2 in einer vierten Ausführungsform.

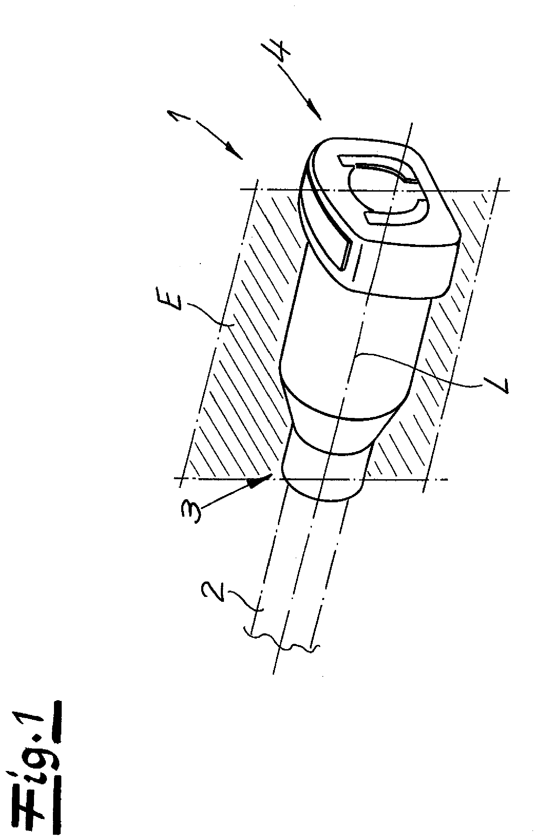

In Fig. 1 ist ein erfindungsgemäßer Verbinder 1 in Form eines Kraftfahrzeugverbinders dargestellt, wobei es sich hier um einen Schnellverbinder für den Anschluss zumindest einer Rohrleitung 2 bzw. Kraftfahrzeugrohrleitung 2 handelt. Der Verbinder ist bevorzugt und im Ausführungsbeispiel für die Durchleitung einer wässrigen Harnstofflösung vorgesehen. Dabei weist der Verbinder 1 zwei Anschlussenden 3, 4 auf und an zumindest einem Anschlussende 3 kann eine Rohrleitung 2 angeschlossen werden. Zwischen den Anschlussenden 3, 4 erstreckt sich ein von einer Verbinderwandung 6 umgebener Innenkanal 5 für die Durchleitung des fluiden Mediums bzw. für die Durchleitung der wässrigen Harnstofflösung. Diese Verbinderwandung 6 bzw. der davon umgebene Innenkanal 5 ist elektrisch beheizbar.

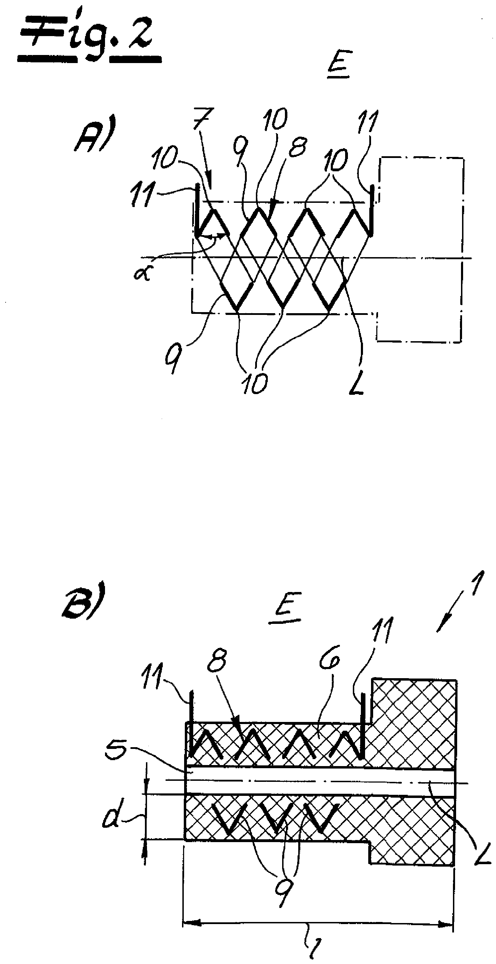

Erfindungsgemäß ist für die elektrische Beheizung der Verbinderwandung 6 bzw. des Innenkanals 5 ein dreidimensional ausgebildetes Heizleiteraggregat 7 aus einem strangförmigen Heizleiter 8 (Heizstrang) vorgesehen. Die Verbinderwandung 6 besteht bevorzugt und im Ausführungsbeispiel aus ein und demselben thermoplastischen Kunststoff und das Heizleiteraggregat 7 ist in diese Verbinderwandung 6 aus dem thermoplastischen Kunststoff eingebettet. Nach besonders empfohlener Ausführungsform und im Ausführungsbeispiel ist das gesamte Heizleiteraggregat 7 und der gesamte strangförmige Heizleiter 8 dieses Heizleiteraggregates 7 in die Verbinderwandung 6 eingebettet. Lediglich zwei Versorgungsabschnitte 11 des strangförmigen Heizleiters 8 für die Stromversorgung des Heizleiteraggregates 7 ragen teilweise aus der Oberfläche der Verbinderwandung 6 heraus (siehe Fig. 2). Die Verbinderwandung 6 ist im Übrigen empfohlenermaßen und im Ausführungsbeispiel als Spritzgussteil ausgebildet.

Der strangförmige Heizleiter 8 (Heizstrang) des Heizleiteraggregates 7 ist nach besonders bevorzugter Ausführungsform der Erfindung als Heizdraht ausgebildet. Dieser strangförmige Heizleiter 8 bzw. Heizdraht weist im Ausführungsbeispiel eine Mehrzahl von Heizleiterabschnitten 9 auf, die sich in radialer Richtung über die radiale Dicke d der Verbinderwandung 6 erstrecken. Vorzugsweise und im Ausführungsbeispiel ist das Heizleiteraggregat 7 bzw. sind die Heizleiterabschnitte 9 des Heizleiteraggregates 7 über den gesamten Umfang des Verbinders verteilt angeordnet und im Übrigen erstreckt sich das Heizleiteraggregat 7 über mehr als 60 % bzw. mehr als 70 % der axialen Länge l des Verbinders 1.

Empfohlenermaßen und im Ausführungsbeispiel enden bzw. münden die sich in radialer Richtung über die Verbinderwandung 6 erstreckenden Heizleiterabschnitte 9 des strangförmigen Heizleiters 8 in Umkehrpunkten 10. An jedem dieser Umkehrpunkte 10 ist ein weiterer Heizleiterabschnitt 9 angeschlossen, der sich im Vergleich zu dem ersten, an den Umkehrpunkt 10 angeschlossenen Heizleiterabschnitt 9 in umgekehrter radialer Richtung erstreckt. Die Umkehrpunkte 10 sind bevorzugt und im Ausführungsbeispiel in die Verbinderwandung 6 bzw. in das Material der Verbinderwandung 6 eingebettet. Es liegt im Rahmen der Erfindung, dass die Umkehrpunkte 10 über den Umfang des Verbinders 1 verteilt angeordnet sind und sich auch über den Großteil der axialen Länge l des Verbinder 1 verteilen. Die Umkehrpunkte 10 sind insbesondere bei Projektion des Heizleiteraggregates 7 auf eine gedachte Projektionsebene E erkennbar, die sich durch die Längsmittelachse L des Verbinders 1 bzw. des Innenkanals 5 erstreckt. Im Ausführungsbeispiel bilden die Heizleiterabschnitte 9 in der gedachten Projektionsebene E an den Umkehrpunkten 10 Spitzen. Der Winkel α zwischen den in einem Umkehrpunkt 10 angeschlossenen Heizleiterabschnitten 9 beträgt hier etwa 55°. Vorzugsweise liegt dieser Winkel α zwischen den in einem Umkehrpunkt 10 angeschlossenen Heizleiterabschnitten 9 in der gedachten Projektionsebene E zwischen 10° und 70°.

Es wurde bereits oben darauf hingewiesen, dass das erfindungsgemäße Heizleiteraggregat 7 zwei Versorgungsabschnitte 11 des strangförmigen Heizleiters 8 aufweist, die für die Stromversorgung des Heizleiteraggregates 7 vorgesehen sind. Diese Versorgungsabschnitte 11 ragen aus der Oberfläche der Verbinderwandung 6 heraus. - In den Figuren wurde nicht dargestellt, dass nach bevorzugter Ausführungsform der Erfindung die Verbinderwandung 6 mit dem darin eingebetteten Heizleiteraggregat 7 von einer zusätzlichen Ummantelung umgeben ist. Bei dieser Ummantelung kann es sich nach einer Ausführungsform um eine spritzgegossene Ummantelung handeln. Zweckmäßigerweise ist die Ummantelung heizleiterfrei bzw. im Wesentlichen heizleiterfrei ausgebildet. Es liegt im Rahmen der Erfindung, dass die Versorgungsabschnitte 11 durch die Ummantelung geführt sein können, dass die Ummantelung aber ansonsten heizleiterfrei bzw. im Wesentlichen heizleiterfrei ausgebildet ist. Grundsätzlich kann die in den Figuren nicht dargestellte Ummantelung auch in Form von zwei sich zur Ummantelung ergänzenden Halbschalen realisiert sein.

In den Fig. 2 bis 5 sind unterschiedliche Ausführungsformen für das erfindungsgemäße Verfahren zur Herstellung eines erfindungsgemäßen Verbinders 1 dargestellt. Bei dem in Fig. 2a) und b) dargestellten Verfahren wird das Heizleiteraggregat 7 bevorzugt in eine nicht dargestellte Spritzgießvorrichtung eingeführt. Anschließend wird die gesamte Verbinderwandung 6 in einem einzigen Spritzgießvorgang erzeugt und das Heizleiteraggregat 7 bei diesem Spritzgießvorgang in die Verbinderwandung 6 eingebettet, wie es in Fig. 2b) dargestellt ist.

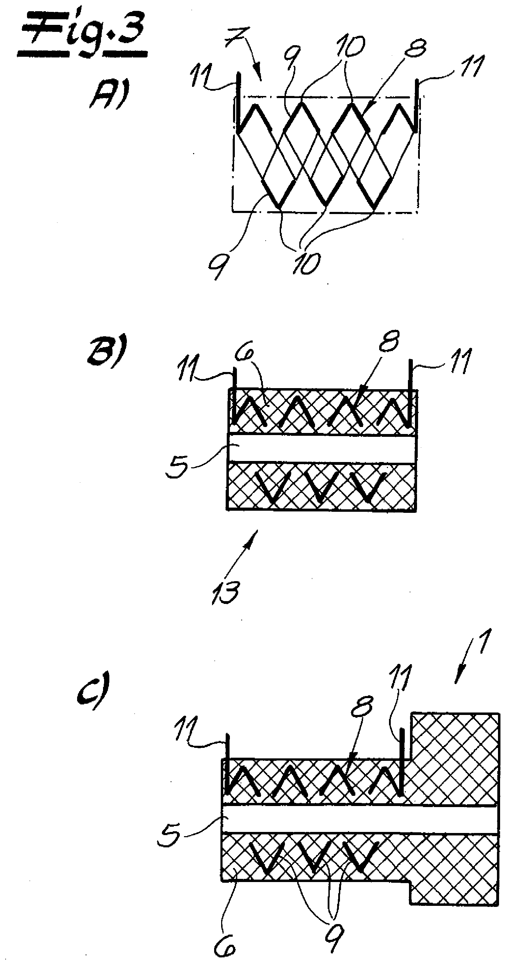

Im Ausführungsbeispiel nach Fig. 3 wird in einem ersten Verfahrensschritt zunächst ein Verbinderwandungsteil 13 mit dem darin eingebetteten Heizleiteraggregat 7 als Vorformteil hergestellt. Dazu wird das Heizleiteraggregat 7 in eine Spritzgießform eingeführt (Fig. 3a) und im Anschluss daran wird dieses Verbinderwandungsteil 13 bzw. Vorformteil durch Spritzgießen erzeugt. In der Fig. 3b) ist das fertige Verbinderwandungsteil 13 bzw. Vorformteil dargestellt. Hier ist das Heizleiteraggregat 7 in das Vorformteil aus thermoplastischem Kunststoff eingebettet. Im Anschluss daran wird dieses Verbinderwandungsteil 13 bzw. Vorformteil in eine Spritzgießvorrichtung eingelegt und dort zur vollständigen bzw. fertigen Verbinderwandung 6 umspritzt. Der daraus resultierende fertige Verbinder ist in der Fig. 3c) dargestellt. Das Verbinderwandungsteil 13 bzw. Vorformteil ist im Übrigen bevorzugt und im Ausführungsbeispiel zylinderförmig ausgebildet. Auch die Verbinderwandung 6 ist zweckmäßigerweise und im Ausführungsbeispiel zylinderförmig ausgeführt.

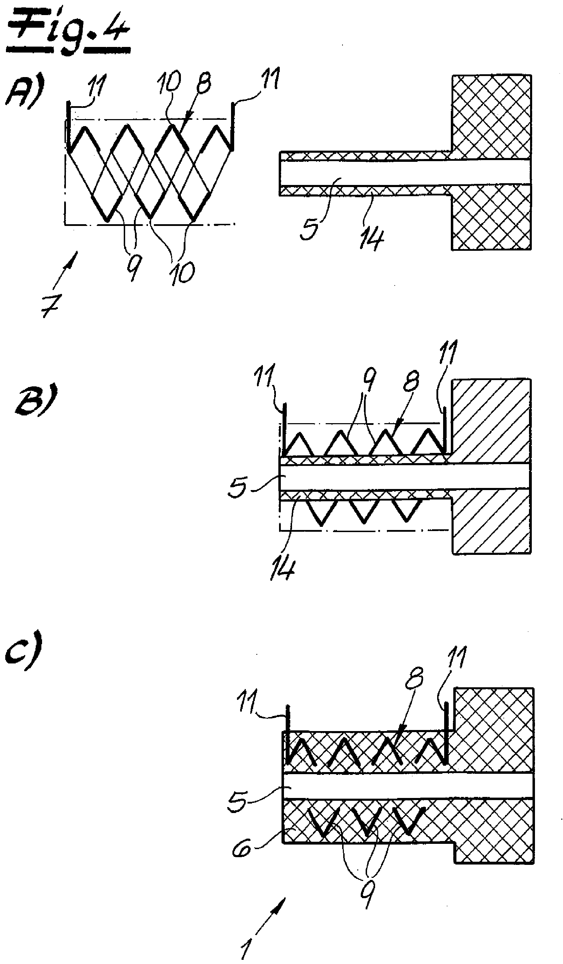

Fig. 4 zeigt eine weitere Ausführungsvariante des erfindungsgemäßen Verfahrens. Hier wird zunächst ein Verbinderwandungsinnenteil 14 - insbesondere durch Spritzgießen - erzeugt. Dabei besteht dieses Verbinderwandungsinnenteil 14 bevorzugt aus thermoplastischem Kunststoff. Anschließend wird - wie eine vergleichende Betrachtung der Fig. 4a) und b) zeigt - das Heizleiteraggregat 7 auf das Verbinderwandungsinnenteil 14 bzw. auf das zylinderförmige Verbinderwandungsinnenteil 14 aufgeschoben. Im Anschluss daran wird dieses Aggregat aus dem Verbinderwandungsinnenteil 14 und dem Heizleiteraggregat 7 in eine Spritzgießvorrichtung eingelegt und zur vollständigen bzw. fertigen Verbinderwandung 6 des Verbinders 1 umspritzt, wobei das fertige Produkt in der Fig. 4c) dargestellt ist.

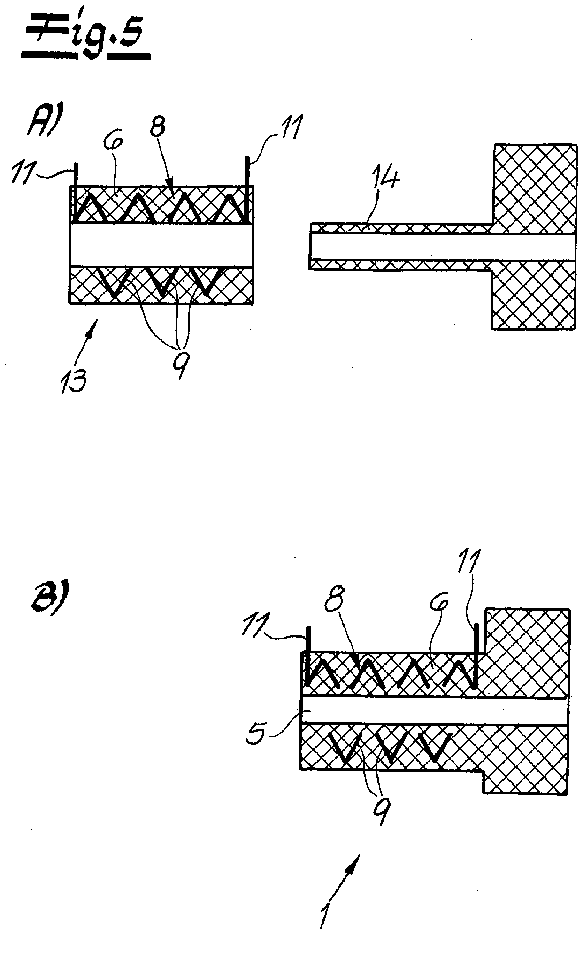

Schließlich ist eine weitere Ausführungsform des erfindungsgemäßen Verfahrens in der Fig. 5 gezeigt. Hier wird wiederum zunächst das Verbinderwandungsteil 13 mit dem eingebetteten Heizleiteraggregat 7 als Vorformteil hergestellt und zwar zweckmäßigerweise durch Spritzgießen. Weiterhin wird das Verbinderwandungsinnenteil 14 - vorzugsweise durch Spritzgießen - erzeugt. Im Anschluss daran wird das Verbinderwandungsteil 13 bzw. Vorformteil auf das Verbinderwandungsinnenteil 14 aufgeschoben, wie in Fig. 5a dargestellt. Dieses Aggregat aus Verbinderwandungsinnenteil 14 und Verbinderwandungsteil 13 wird dann vorzugsweise in eine Spritzgießvorrichtung eingeführt und hier wird durch Spritzen bzw. um Umspritzen die vollständige bzw. endgültige Verbinderwandung 6 des Verbinders 1 erzeugt, was in Fig. 5b) dargestellt ist.

## Patentansprüche

1. Verbinder (1) bzw. Kraftfahrzeugverbinder (1), insbesondere Schnellverbinder für den Anschluss zumindest einer Rohrleitung (2) bzw. Kraftfahrzeugrohrleitung (2) für die Durchleitung eines fluiden Mediums, insbesondere für die Durchleitung einer Harnstofflösung, wobei der Verbinder (1) zumindest zwei Anschlussenden (3, 4) aufweist, von denen zumindest ein Anschlussende (3) für den Anschluss einer Rohrleitung (2) vorgesehen ist, wobei sich zwischen den Anschlussenden (3, 4) eine einen Innenkanal (5) für die Durchleitung des fluiden Mediums umgebende Verbinderwandung (6) erstreckt, wobei die Verbinderwandung (6) bzw. der Innenkanal (5) elektrisch beheizbar ist, wobei für die elektrische Beheizung der Verbinderwandung (6) bzw. des Innenkanals (5) zumindest ein dreidimensional ausgebildetes Heizleiteraggregat (7) aus einem strangförmigen Heizleiter (8) vorhanden ist, wobei zumindest 30%, vorzugsweise zumindest 40% und bevorzugt zumindest 50% der Länge des strangförmigen Heizleiters (8) in die Verbinderwandung (6) eingebettet ist und wobei mehrere Heizleiterabschnitte (9) des strangförmigen Heizleiters (8) in radialer Richtung quer zur Längsachse des Verbinders (1) angeordnet sind und sich über jeweils zumindest 60% der radialen Dicke d der Verbinderwandung (6) erstrecken und wobei zumindest ein Teil der sich in radialer Richtung über jeweils zumindest 60% der radialen Dicke d der Verbinderwandung (6) erstreckenden Heizleiterabschnitte (9) in Umkehrpunkten (10) endet, wobei an einem solchen Umkehrpunkt (10) zumindest ein weiterer Heizleiterabschnitt (9) des strangförmigen Heizleiters (8) angeschlossen ist, der sich im Vergleich zu dem ersten an den Umkehrpunkt (10) angeschlossenen Heizleiterabschnitt (9) des Heizleiters (8) in umgekehrter radialer Richtung erstreckt.

2. Verbinder nach Anspruch 1, wobei die Verbinderwandung (6) als Spritzgussteil ausgebildet ist bzw. Bestandteil eines Spritzgussteiles ist.

3. Verbinder nach einem der Ansprüche 1 oder 2, wobei die Verbinderwandung (6) aus ein und demselben Kunststoff bzw. thermoplastischen Kunststoff besteht.

4. Verbinder nach einem der Ansprüche 1 bis 3, wobei sich das Heizleiteraggregat (7) bzw. der strangförmige Heizleiter (8) über zumindest 50%, vorzugsweise über zumindest 60% und bevorzugt über zumindest 70% des Umfanges des Verbinders (1) erstreckt.

5. Verbinder nach einem der Ansprüche 1 bis 4, wobei sich das Heizleiteraggregat (7) bzw. der strangförmige Heizleiter (8) über zumindest 30%, vorzugsweise über zumindest 40% und bevorzugt über zumindest 50% der axialen Länge l des Verbinders (1) erstreckt.

6. Verbinder nach einem der Ansprüche 1 bis 5, wobei der strangförmige Heizleiter (8) als zumindest ein Heizdraht ausgebildet ist.

7. Verbinder nach einem der Ansprüche 1 bis 6, wobei sich zumindest fünf, bevorzugt zumindest sieben Heizleiterabschnitte (9) in radialer Richtung über jeweils zumindest 70% der radialen Dicke d der Verbinderwandung (6) erstrecken.

8. Verbinder nach einem der Ansprüche 1 bis 7, wobei zumindest ein Teil der Umkehrpunkte (10) in die Verbinderwandung (6) bzw. in das Material der Verbinderwandung (6) eingebettet ist.

9. Verbinder nach einem der Ansprüche 1 bis 8, wobei zumindest zwei, bevorzugt zwei Versorgungsabschnitte (11) des strangförmigen Heizleiters (8) für die Stromversorgung des Heizleiteraggregates (7) vorgesehen sind und wobei die Versorgungsabschnitte (11) sich über zumindest einen Teil, bevorzugt über zumindest 20% der radialen Dicke d der Verbinderwandung (6) in radialer Richtung erstrecken.

10. Verbinder nach einem der Ansprüche 1 bis 9, wobei eine die Verbinderwandung (6) umgebende Ummantelung vorgesehen ist, wobei es sich bei dieser Ummantelung bevorzugt um eine gegossene bzw. spritzgegossene Ummantelung handelt und wobei die Ummantelung vorzugsweise heizleiterfrei ausgebildet ist.

11. Verfahren zur Herstellung eines Verbinders (1) bzw. Kraftfahrzeugverbinders, insbesondere eines Schnellverbinders für den Anschluss zumindest einer Rohrleitung (2) für die Durchleitung eines fluiden Mediums, vor allem für die Durchleitung einer Harnstofflösung - insbesondere eines Verbinders nach einem der Ansprüche 1 bis 10, wobei eine einen Innenkanal (5) umgebende Verbinderwandung (6) zumindest zum Teil bzw. zumindest teilweise durch Spritzgießen aus thermoplastischem Kunststoff erzeugt wird, wobei zumindest ein Heizleiteraggregat (7) mit dreidimensionaler Struktur aus einem strangförmigen Heizleiter (8) beim Spritzgießen in die Verbinderwandung (6) eingebettet wird und zwar mit der Maßgabe eingebettet wird, dass zumindest 30%, vorzugsweise zumindest 40% und bevorzugt zumindest 50% der Länge des strangförmigen Heizleiters (8) in die Verbinderwandung (6) eingebettet ist und dass mehrere Heizleiterabschnitte (9) des strangförmigen Heizleiters (8) in radialer Richtung quer zur Längsachse des Verbinders (1) angeordnet sind und sich über jeweils zumindest 60% der radialen Dicke d der Verbinderwandung erstrecken und dass zumindest ein Teil der sich in radialer Richtung über jeweils zumindest 60% der radialen Dicke d der Verbinderwandung (6) erstreckenden Heizleiterabschnitte (9) in Umkehrpunkten (10) endet, wobei an einem solchen Umkehrpunkt (10) zumindest ein weiterer Heizleiterabschnitt (9) des strangförmigen Heizleiters (8) angeschlossen ist, der sich im Vergleich zu dem ersten an den Umkehrpunkt (10) angeschlossenen Heizleiterabschnitt (9) des Heizleiters (8) in umgekehrter radialer Richtung erstreckt.

12. Verfahren nach Anspruch 11, wobei die gesamte Verbinderwandung (6) bzw. im Wesentlichen die gesamte Verbinderwandung (6) in einem Spritzgießvorgang erzeugt wird und das Heizleiteraggregat bei diesem einen Spritzgießvorgang in die Verbinderwandung eingebettet wird.

13. Verfahren nach Anspruch 11, wobei ein Verbinderwandungsteil (13) mit dem darin eingebetteten Heizleiteraggregat (7) als Vorformteil aus thermoplastischem Kunststoff hergestellt wird und wobei im Anschluss daran das Verbinderwandungsteil (13) bzw. Vorformteil in eine Spritzgießvorrichtung eingelegt wird und dort zur vollständigen Verbinderwandung (6) umspritzt wird.

14. Verfahren nach einem der Ansprüche 11 oder 13, wobei zunächst ein Verbinderwandungsinnenteil (14) - vorzugsweise durch Spritzgießen - erzeugt wird und wobei ein Verbinderwandungsteil (13) bzw. Vorformteil mit dem darin eingebetteten Heizleiteraggregat (7) auf das Verbinderwandungsinnenteil (14) aufgebracht bzw. aufgeschoben wird.

15. Verfahren nach Anspruch 14, wobei das Aggregat aus Verbinderwandungsinnenteil (14) und Verbinderwandungsteil (13) bzw. Vorformteil in einer Spritzgießvorrichtung zur vollständigen Verbinderwandung (6) des Verbinders (1) umspritzt wird.

16. Verfahren nach Anspruch 11, wobei zunächst ein Verbinderwandungsinnenteil (14) - vorzugsweise durch Spritzgießen - erzeugt wird, wobei anschließend das Heizleiteraggregat (7) auf das Verbinderwandungsinnenteil (14) aufgebracht bzw. aufgeschoben wird und wobei danach das Aggregat aus Verbinderwandungsinnenteil (14) und darauf aufgebrachten Heizleiteraggregat (7) in einer Spritzgießvorrichtung zur vollständigen Verbinderwandung (6) des Verbinders (1) umspritzt wird.

## Claims

1. A connector (1) or motor vehicle connector (1), in particular quick connector for connecting at least one pipeline (2) or motor vehicle pipeline (2) for conducting a fluid medium, in particular for conducting a urea solution, wherein the connector (1) has at least two connection ends (3, 4), of which at least one connection end (3) is provided for connecting a pipeline (2); wherein a connector wall (6), which surrounds an inner duct (5) for conducting the fluid medium, extends between the connection ends (3, 4); wherein the connector wall (6) or the inner duct (5) is electrically heatable; wherein at least one three-dimensional heating conductor assembly (7) consisting of a heating conductor (8) in strand form is present for the electrical heating of the connector wall (6) or of the inner duct (5); wherein at least 30%, preferably at least 40%, and more preferably at least 50% of the length of the heating conductor (8) in strand form is embedded in the connector wall (6); and wherein a plurality of heating conductor sections (9) of the heating conductor (8) in strand form are arranged in the radial direction transversely to the longitudinal axis of the connector (1) and extend in each case over at least 60% of the radial thickness d of the connector wall (6); and wherein at least some of the heating conductor sections (9) which extend in the radial direction in each case over at least 60% of the radial thickness d of the connector wall (6) end at deflection points (10); wherein at least one further heating conductor section (9) of the heating conductor (8) in strand form is connected to such a deflection point (10), said heating conductor extending in the opposite radial direction to the first heating conductor section (9) of the heating conductor (8) which is connected to the deflection point (10).

2. The connector according to Claim 1, wherein the connector wall (6) is in the form of an injection-moulded part or a component of an injection-moulded part.

3. The connector according to either of Claims 1 or 2, wherein the connector wall (6) consists of the same plastic or thermoplastic material.

4. The connector according to any one of Claims 1 to 3, wherein the heating conductor assembly (7) or the heating conductor (8) in strand form extends over at least 50%, preferably over at least 60% and more preferably over at least 70% of the circumference of the connector (1).

5. The connector according to any one of Claims 1 to 4, wherein the heating conductor assembly (7) or the heating conductor (8) in strand form extends over at least 30%, preferably over at least 40% and more preferably over at least 50% of the axial length l of the connector (1).

6. The connector according to any one of Claims 1 to 5, wherein the heating conductor (8) in strand form is in the form of at least one heating wire.

7. The connector according to any one of Claims 1 to 6, wherein at least five, preferably at least seven heating conductor sections (9) extend in the radial direction in each case over at least 70% of the radial thickness d of the connector wall (6).

8. The connector according to any one of Claims 1 to 7, wherein at least some of the deflection points (10) are embedded in the connector wall (6) or in the material of the connector wall (6).

9. The connector according to any one of Claims 1 to 8, wherein at least two, preferably two supply sections (11) of the heating conductor (8) in strand form are provided for supplying current to the heating conductor assembly (7), and wherein the supply sections (11) extend over at least some, preferably over at least 20% of the radial thickness d of the connector wall (6) in the radial direction.

10. The connector according to any one of Claims 1 to 9, wherein a sheath is provided which surrounds the connector wall (6), wherein said sheath is preferably a moulded or injection-moulded sheath and wherein the sheath is preferably free of heating conductors.

11. A method for producing a connector (1) or motor vehicle connector, in particular a quick connector for connecting at least one pipeline (2) for conducting a fluid medium, primarily for conducting a urea solution, in particular a connector according to any one of Claims 1 to 10, wherein a connector wall (6) which surrounds an inner duct (5) is at least partially produced by injection-moulding from thermoplastic material; wherein at least one heating conductor assembly (7) with a three-dimensional structure consisting of a heating conductor (8) in strand form is embedded in the connector wall (6) during the injection-moulding, with the proviso that at least 30%, preferably at least 40%, and more preferably at least 50% of the length of the heating conductor (8) in strand form is embedded in the connector wall (6) and that a plurality of heating conductor sections (9) of the heating conductor (8) in strand form are arranged in the radial direction transversely to the longitudinal axis of the connector (1) and extend in each case over at least 60% of the radial thickness d of the connector wall and that at least some of the heating conductor sections (9) which extend in the radial direction in each case over at least 60% of the radial thickness d of the connector wall (6) end at deflection points (10); wherein at least one further heating conductor section (9) of the heating conductor (8) in strand form is connected to such a deflection point (10), said heating conductor extending in the opposite radial direction to the first heating conductor section (9) of the heating conductor (8) which is connected to the deflection point (10).

12. The method according to Claim 11, wherein the entire connector wall (6) or substantially the entire connector wall (6) is produced in an injection-moulding process, and the heating conductor assembly is embedded in the connector wall during said injection-moulding process.

13. The method according to Claim 11, wherein a connector wall part (13) with the heating conductor assembly (7) embedded therein is produced from thermoplastic material as a premoulded part, and wherein the connector wall part (13) or premoulded part is then placed in an injection-moulding device and overmoulded there to form the complete connector wall (6).

14. The method according to either of Claims 11 or 13, wherein a connector wall inner part (14) is produced first, preferably by injection-moulding, and wherein a connector wall part (13) or premoulded part with the heating conductor assembly (7) embedded therein is applied to or pushed onto the connector wall inner part (14) .

15. The method according to Claim 14, wherein the assembly consisting of the connector wall inner part (14) and the connector wall part (13) or premoulded part is overmoulded in an injection-moulding device to form the complete connector wall (6) of the connector (1).

16. The method according to Claim 11, wherein a connector wall inner part (14) is produced first, preferably by injection-moulding, wherein the heating conductor assembly (7) is then applied to or pushed onto the connector wall inner part (14), and wherein the assembly consisting of connector wall inner part (14) and heating conductor assembly (7) applied thereto is then overmoulded in an injection-moulding device to form the complete connector wall (6) of the connector (1).

## Revendications

1. Raccord (1) ou raccord pour véhicule automobile (1), notamment raccord rapide pour le raccordement d'au moins une conduite (2) ou conduite de véhicule automobile (2) pour le passage d'un milieu fluide (2), notamment pour le passage d'une solution d'urée, le raccord (1) comportant au moins deux extrémités de raccordement (3,4) dont au moins une extrémité de raccordement (3) est prévue pour le raccordement d'une conduite (2), une paroi de raccord (6) entourant un conduit intérieur (5) pour le passage du milieu fluide s'étendant entre les extrémités de raccordement (3,4), la paroi de raccord (6) ou le conduit intérieur (5) pouvant être chauffé électriquement, au moins un ensemble de conducteurs chauffants (7) constitué de manière tridimensionnelle à partir d'un conducteur chauffant (8) en forme de cordon étant présent pour le chauffage électrique de la paroi de raccord (6) ou du conduit intérieur (5), au moins 30%, de préférence au moins 40%, et de préférence au moins 50% de la longueur du conducteur chauffant en forme de cordon (8) étant encastrés dans la paroi de raccord (6) et plusieurs tronçons de conducteur chauffant (9) du conducteur chauffant en forme de cordon (8) étant disposés en direction radiale transversalement à l'axe longitudinal du raccord (1) et s'étendant sur respectivement au moins 60% de l'épaisseur radiale d de la paroi de raccord (6) et à au moins une partie des tronçons de conducteur chauffant (9) s'étendant dans la direction radiale sur respectivement au moins 60% de l'épaisseur radiale d de la paroi de raccord (6) finissant aux points d'inversion (10), au moins un autre tronçon de conducteur chauffant (9) du conducteur chauffant en forme de cordon (8) étant raccordé à un tel point d'inversion (10), qui s'étend dans la direction radiale inversée en comparaison du premier tronçon de conducteur chauffant (9) du conducteur chauffant (8) raccordé au point d'inversion (10) .

2. Raccord selon la revendication 1, la paroi de raccord (6) étant constituée sous la forme d'une pièce moulée par injection ou d'un composant d'une pièce moulée par injection.

3. Raccord selon l'une quelconque des revendications 1 ou 2, la paroi de raccord (6) étant composée d'une seule et même matière plastique ou matière thermoplastique.

4. Raccord selon l'une quelconque des revendications 1 à 3, l'ensemble de conducteurs chauffants (7) ou le conducteur chauffant en forme de cordon (8) s'étendant sur au moins 50%, de préférence sur au moins 60% et de préférence sur au moins 70% de la périphérie du raccord (1).

5. Raccord selon l'une quelconque des revendications 1 à 4, l'ensemble de conducteur chauffant (7) ou le conducteur chauffant en forme de cordon (8) s'étendant sur au moins 30%, de préférence sur au moins 40% et de préférence sur au moins 50% de la longueur axiale l du raccord (1).

6. Raccord selon l'une quelconque des revendications 1 à 5, le conducteur chauffant en forme de cordon (8) étant constitué sous la forme d'au moins un fil chauffant.

7. Raccord selon l'une quelconque des revendications 1 à 6, au moins cinq, de préférence au moins sept tronçons de conducteur chauffant (9) s'étendant dans la direction radiale sur respectivement au moins 70% de l'épaisseur radiale d de la paroi de raccord (6).

8. Raccord selon l'une quelconque des revendications 1 à 7, au moins une partie des points d'inversion (10) étant encastrée dans la paroi de raccord (6) ou dans le matériau de la paroi de raccord (6).

9. Raccord selon l'une quelconque des revendications 1 à 8, au moins deux, de préférence deux tronçons d'alimentation (11) du conducteur chauffant en forme de cordon (8) étant prévus pour l'alimentation en courant de l'ensemble de conducteurs chauffants (7) et les tronçons d'alimentation (11) s'étendant sur au moins une partie, de préférence sur au moins 20% de l'épaisseur radiale d de la paroi de raccord (6) dans la direction radiale.

10. Raccord selon l'une quelconque des revendications 1 à 9, un gainage entourant la paroi de raccord (6) étant prévu, s'agissant pour ce gainage de préférence d'un gainage moulé ou moulé par injection et le gainage étant constitué de préférence sans conducteur chauffant.

11. Procédé de fabrication d'un raccord (1) ou raccord pour véhicule automobile, notamment d'un raccord rapide pour le raccordement d'au moins une conduite (2) pour le passage d'un milieu fluide, surtout pour le passage d'une solution d'urée, notamment d'un raccord selon l'une quelconque des revendications 1 à 10, une paroi de raccord (6) entourant un conduit intérieur (5) étant au moins en partie ou au moins partiellement produite par moulage par injection de matière thermoplastique, au moins un ensemble de conducteurs chauffants (7) avec une structure tridimensionnelle d'un conducteur chauffant en forme de cordon (8) étant encastré lors du moulage par injection dans la paroi de raccord (6) et étant à vrai dire encastré à condition qu'au moins 30%, de préférence au moins 40% et de préférence au moins 50% de la longueur du conducteur chauffant en forme de cordon (8) soient encastrés dans la paroi de raccord (6) et que plusieurs tronçons de conducteur chauffant (9) du conducteur chauffant en forme de cordon (8) soient disposés dans la direction radiale transversalement à l'axe longitudinal du raccord (1), et s'étendent sur respectivement au moins 60% de l'épaisseur radiale d de la paroi de raccord et qu'au moins une partie des tronçons de conducteur chauffant (9) s'étendant en direction radiale sur respectivement au moins 60% de l'épaisseur radiale d de la paroi de raccord (6) finissent aux point d'inversion (10), au moins un autre tronçon de conducteur chauffant (9) du conducteur chauffant en forme de cordon (8) étant raccordé à un tel point d'inversion (10), qui s'étend dans la direction radiale inversée en comparaison du premier tronçon de conducteur chauffant (9) du conducteur chauffant (8) raccordé au point d'inversion (10) .

12. Procédé selon la revendication 11, toute la paroi de raccord (6) ou pour l'essentiel la paroi de raccord entière (6) étant produite dans une opération de moulage par injection et l'ensemble de conducteurs chauffants étant encastré dans la paroi de raccord lors de cette opération de moulage par injection.

13. Procédé selon la revendication 11, une partie de la paroi de raccord (13) avec l'ensemble de conducteurs chauffants (7) encastré dedans étant fabriquée en tant que pièce préformée en matière thermoplastique et la partie de paroi de raccord (13) ou la pièce préformée étant suite à cela introduite dans un dispositif de moulage par injection et y est enrobée par injection en une paroi de raccord complète (6).

14. Procédé selon l'une quelconque des revendications 11 à 13, une partie intérieure de paroi de raccord (14) étant d'abord produite de préférence par moulage par injection et une partie de paroi de raccord (13) ou pièce préformée avec l'ensemble de conducteurs chauffants (7) encastré dedans étant montée ou enfilée sur la partie intérieure de paroi de raccord (14).

15. Procédé selon la revendication 14, l'ensemble de partie intérieure de paroi de raccord (14) et la partie de paroi de raccord (13) ou la pièce préformée étant enrobée par injection dans un dispositif de moulage par injection en une paroi de raccord complète (6) du raccord (1).

16. Procédé selon la revendication 11, une partie intérieure de paroi de raccord (14) étant d'abord produite, de préférence par moulage par injection, l'ensemble de conducteurs chauffants (7) étant ensuite monté ou enfilé sur la partie intérieure de paroi de raccord (14) et l'ensemble composé de la partie intérieure de paroi de raccord (14) et de l'ensemble de conducteurs chauffants monté dessus (7) étant ensuite enrobé par injection dans un dispositif de moulage par injection en une paroi de raccord complète (6) du raccord (1).
